# EUROPEAN PATENT APPLICATION

(11) **EP 3 766 690 A1**
(43) Date of publication of application: **20.01.2021**
(21) Application number: 20185990.7
(22) Date of filing: 15.07.2020
(51) Int. Cl.: B32B 15/08, B21C 23/00, B29C 63/00, B32B 15/092, B32B 15/20, B32B 37/15

(54) **HYBRID METAL PROFILE LAMINATED WITH A FIBRE REINFORCED POLYMER, PRODUCTION METHOD AND USES THEREOF**

(30) Priority: 15.07.2019 PT 2019115647
(71) Applicant: Inegi - Instituto de Ciência e Inovação em Engenharia Mecânica e Engenharia Industrial, 4200-465 Porto (PT)
(72) Inventor: TORRES MARQUES, Antonio, 4200-272 Porto (PT); LEITÃO PEREIRA, Ruben Leandro, 3620-303 Moimenta da Beira (PT); FERNANDES LIMA, Joao Marcelo, 4990-308 Ponte de Lima (PT); FERREIRA AMORIM, Helder, 4500-034 Espinho (PT); JORGE NETO, Rui Lemos, 4460-255 Senhora da Hora (PT)
(74) Representative: Patentree

(57) **Abstract**

The present disclosure refers to a semi-finished hybrid profile, which comprises a layered structure wherein the layered structure comprises a metal profile with predetermined shape obtained by extrusion; a polymeric matrix reinforced with a plurality of fibers; wherein the fibers are superimposed on the metal profile encompassing (fully or partially) said metal profile; wherein the fibers are bonded to the metal profile through the polymer matrix; wherein the polymer matrix was subjected to heat treatment for curing or consolidation after application in the metal profile; wherein the metal profile was artificially aged by the heat treatment of the polymer matrix.

## Description

### TECHNICAL FIELD

This description concerns the development of an expeditious way of creating hybrid profiles of metal alloys, preferably aluminum alloys, magnesium alloys, titanium alloys, steel, or combinations thereof, and a fiber reinforced polymer matrix. The intention is to describe a combined production process, between extrusion of metals, more specifically aluminum alloys, and the pultrusion of polymer matrix composites, namely an epoxy resin matrix, among others, reinforced with fibers selected from the following list: carbon fibers, graphite fibers, fiberglass, natural organic fibers, or other synthetic fibers, or combinations thereof.

### BACKGROUND

Hybrid components arise due to the possibility of combining the constituent materials, making the most favorable properties of each prevail for a given application.

Metals/metal alloys are used for all types of structural applications as long as this type of applications exist. There is, therefore, a vast knowledge about their properties and behaviors in the most diverse situations. The need for the various industries to create products with increasing strength and greater stiffness, but less weight, has been causing metals to, no longer, have arguments to meet all these demands. At this point, composite materials, due to their excellent stiffness and strength properties associated with a low weight, have been found to achieve results that metals do not allow. However, there are also some constraints in the application of composite materials to all situations, to start with the high price associated to the production of components, since many of the production processes of composite materials are time consuming and require very specialized equipment.

Metal/composite hybrids, such as aluminum alloys/polymer matrix composite (thermoset or thermoplastic) may be presented as a solution in different situations, as they achieve a combination of the properties of the materials that constitute it, such as combining high strength, stiffness and low weights to good ductility, easier manufacturing, simpler bonds among components and more moderate costs.

Extrusion is one of the traditional processes of production of metal components, having a great importance in the industry. The end products have good surface and dimensional quality, and good mechanical properties as well. It is a process with high profitability, and can be used with different materials.

A composite refers to a material consisting of distinct phases, wherein at least two of those phases exhibit very unequal mechanical properties. In order for the composite material to display good properties as a whole there will have to be compatibility between the matrix and the reinforcement through a good adhesion between them.

A composite is manufactured in order to highlight the best properties of each of the phases, so as to ensure an end product of superior characteristics.

In this particular case, composites formed from a polymer matrix and a fiber are of interest, but there are several examples of composite materials. These can range from straw-reinforced clay bricks in ancient times to reinforced concrete currently used on a large scale, as well as in the systems used.

Thus, a process that can promote the hybridization of metal profiles, mainly aluminum alloy/polymer matrix composite in an expeditious and efficient way, becomes quite appealing as a solution that may be applied in the industry.

The automotive industry, for example, is a market that increasingly acquires and uses products entirely in composite material because they offer excellent specific properties, which are much superior to those of metals and alloys commonly used, which allows a significant reduction in the weight of components. Due to environmental concerns, there is a need to carry out a constant search for ways to reduce the weight of vehicles in order to have a consequent reduction in associated emissions.

The application of the pultrusion process for the production of hybrid profiles is already somewhat explored in the inclusion of foam preforms as a core, and there is also the possibility of incorporating rigid elements, in order to increase stiffness at specific points, whose elements could be metals, composites previously produced, woods, among others. However, the production of pultrusion profiles with metal core is something that does not exist.

These facts are described in order to illustrate the technical problem solved by the embodiments of this document.

### GENERAL DESCRIPTION

There are several definitions for hybrid materials or hybridization, however under analysis within the present disclosure is the junction of a metallic material, such as aluminum, with a composite material consisting of a polymer matrix, preferably fiber reinforced epoxy resin, such as carbon fiber.

In one embodiment, the hybrid profiles described in this disclosure combine various materials such as magnesium/composite alloys; titanium/composite alloys; steel/composite, or combinations thereof.

One of the objectives of the present embodiments is to provide a solution for the development of hybrid products, namely metal profiles and a fiber reinforced polymer matrix composite, wherein the bond between reinforcement fibers or fiber bundle and the profile is made by the polymer matrix. Therefore, the inclusion of an adhesive is avoided, which simplifies the process, decreases the consumption of raw material and still the hybrid profile obtained has a cohesive behavior.

The aim of this disclosure is to present a way of increasing the production rate of hybrid components, thus ensuring higher productivity and lower processing costs. One of the intended objectives is to demonstrate the compatibility of the extrusion process of aluminum alloys with the pultrusion process, since these are the production processes presenting a higher cadence for each of the constituent materials of the hybrid profile, attempting to find an optimal point that allows to produce an appealing component both at the level of properties and at the level of processing costs and, still, of cadence. Additionally, this disclosure intends to define the level of production of this type of hybrid profiles in order to verify the improvement of properties and adhesion, using as adhesive element the matrix of the composite material itself. Thus, it avoids using an external adhesive that would require an application on the surface(s) to join, thus slowing down the speed of the process.

Extrusion is a process of production of semi-continuous aluminum alloy profiles, wherein the raw aluminum alloy (billet) is forced through a matrix acquiring the shape predefined by the piece designer.

This disclosure is based on the idealization of a production line based on the association of the extrusion process with the pultrusion process, in order to create a solution of high productivity and efficiency for producing hybrid profiles of aluminum and polymer matrix composite.

This disclosure promotes the compatibility of the extrusion process of aluminum alloys, or other metal, with the pultrusion process, as these are the production processes with higher cadence for each of the constituent materials of the hybrid profile, attempting to find an optimal point that allows producing an appealing component both at the level of properties and at the level of processing costs.

As such, using the hot extrusion process, after the exiting the die and cooling the metal profile up to about 200 °C or after aging, as more appropriate, the hybridization process is initiated using pre-impregnated systems. It should be noted that the temperature for curing the thermoset composite will be provided by the metal profile. In one embodiment, where semi-products of thermoplastic matrix composites are chosen the conformation temperature will be provided by the metal profile.

The present disclosure was developed with the Funding of the Project NORTE-01-0145-FEDER-000022 - SciTech - Science and Technology for Competitive and Sustainable Industries, co-financed by the North Portugal Operational Programme - *Programa Operacional Regional do Norte* (NORTE2020), through the European Regional Development Fund - *Fundo Europeu de Desenvolvimento Regional* (FEDER).

A hybrid profile is described, comprising a layered structure, wherein the layered structure comprises a metal profile with a predetermined shape; a polymer matrix reinforced with a plurality of fibers; wherein the fibers are selected from a list consisting of: carbon fibers, fiberglass, natural organic fibers, synthetic fibers or combinations thereof; wherein the fibers are superimposed on the metallic material encompassing (fully or partially) said profile; wherein the fibers are bonded to the metal profile through the polymer matrix.

A hybrid profile is also described as a semi-finished product, which comprises a layered structure wherein the layered structure comprises: a metal profile with predetermined shape obtained by extrusion; a polymer matrix reinforced with a plurality of fibers; wherein the fibers are superimposed on the metal profile encompassing (fully or partially) said metal profile; wherein the fibers are bonded to the metal profile through the polymer matrix; wherein the polymer matrix was subjected to heat treatment for curing or consolidation after pultrusion application in the metal profile; wherein the metal profile was artificially aged by the heat treatment of the polymer matrix.

In one embodiment, the metal profile was artificially aged only by the heat treatment of the polymer matrix.

In one embodiment for best results, the fibers and the polymer matrix are evenly distributed along the profile and the fibers are soaked by the polymer matrix. The fibers soaked by the polymer matrix form a composite material.

In one embodiment, the fibers are on the matrix, in form of a bundle and are unidirectional, bidirectional or multidirectional.

In one embodiment, the fibers are oriented transversely to the metallic material.

In one embodiment, the fibers are selected from a list consisting of: carbon fibers, graphite fibers, fiberglass, natural organic fibers, synthetic fibers or combinations thereof.

In one embodiment, the fibers, with orientations to be defined, are selected from a list consisting of: carbon fibers, graphite fibers, fiberglass, natural organic fibers, synthetic fibers or combinations thereof.

In one embodiment, the metallic profile comprises a metal alloy of: aluminum, magnesium, titanium, steel or combinations thereof, in particular an aluminum metal alloy.

In one embodiment, the metal profile is made of a metal alloy of: aluminum, magnesium, titanium, steel or combinations thereof.

In one embodiment, the fibers are soaked in the polymer matrix, in particular the fibers are pre-impregnated in the polymer matrix.

In one embodiment, the ratio between metal profile/polymer matrix is 4/1 - 49/1 by mass/mass, preferably a ratio of 10/1 - 30/1 mass/mass.

In one embodiment for best results, the metal profile/composite material varies between 98/02 - 80/20 by mass.

In one embodiment for best results, the polymer matrix is a thermoset or thermoplastic matrix, in particular a thermoset matrix of epoxy resin.

The thermoplastic matrix is composed of polymers that present a linear structure, where macromolecules are joined by intermolecular bonds. Thanks to this type of bonds, thermoplastics from a certain temperature are moldable and malleable. When the temperature drops, the molecules fix positions and the material acquires a fixed shape. The heating and cooling process can be applied as often as necessary as the thermoplastic material will always maintain its properties and is therefore recyclable.

The thermoset matrix is the most used in the field of composite materials. This type of matrix is, as suggested by the name, composed of a thermoset material that is a polymer with a very rigid three-dimensional structure, where its molecules are joined not only by macromolecular forces, but also by chemical bonds (crosslink). This makes the thermoset a very appealing material both at the level of mechanical properties, as well as concerning the tolerance it presents at high temperatures.

The processing of thermoset matrices is based on the mixture of two or three components, namely resin, a reaction initiator (catalyst/hardener) and, where appropriate, an accelerator. After mixing the correct quantities of each of these components, polymerization occurs and, thus, the constitution of the three-dimensional structure, this process being called curing. Resin curing can be performed at room temperature, although in some cases it is necessary to apply pressure and/or temperature.

In one embodiment, the polymer matrix is a matrix of epoxy resin, not saturated (or unsaturated) polyester resin, vinyl ester resin, or mixtures thereof.

In a preferred embodiment for best results, the ratio between epoxy resin and fibers varies between 20/80 - 70/30 by mass.

In a preferred embodiment, carbon fiber comprises a carbon content between 80% - 95% by mass.

In a preferred embodiment, carbon fiber is a graphite fiber.

In a preferred embodiment, graphite fiber comprises a carbon content between 95% and 99% by mass.

In one embodiment, the ratio between the polymer matrix and the fibers varies between 1/4 - 7/3 by mass/mass, preferably a ratio of 1/1 - 6/3 mass/mass.

In one embodiment, the cross-section of the predetermined profile is U-shaped, L-shaped, H-shaped, semicircular section, oval section, circular section, square section, or combinations thereof.

In one embodiment, the polymer matrix composite or the polymer matrix comprises a thickness of 0.2 - 0.5 mm, preferably 0.3 - 0.4 mm, but may allow another type of thickness.

In one embodiment, the polymer matrix comprises loads and/or reaction initiators.

It is also described a method for hybrid profile production with a layered structure comprising a metal profile with a predetermined shape; a polymer matrix reinforced with a plurality of fibers, that comprises the following steps: obtaining a metal profile with predetermined dimensions; applying on the metal profile simultaneously a polymer matrix reinforced with fibers wherein the fibers are superimposed on the metal profile; wherein the fibers are selected from a list consisting of: carbon fibers, fiberglass, natural organic fibers, synthetic fibers or combinations thereof; cutting the hybrid profile obtained from the previous step.

In one embodiment, in the method for hybrid profile production, the profile is heated before the application of the polymer matrix, preferably 2-3 hours in an oven between 150 - 180 ° C.

In one embodiment, the method for hybrid profile production comprises the following steps: curing the metal profile with the polymer matrix reinforced with fibers, preferably for 0.05-10 hours maintaining the temperature, preferably 1-2 hours; cooling the hybrid profile obtained from the previous cure; preferably if necessary performing curing cycles until obtaining the desired hybrid profile; optionally applying an appropriate pressure on the hybrid profile obtained in the previous step in order to extend it, preferably applying a pressure between 0.35 to 1.38 MPa.

In one embodiment, in the method for hybrid profile production, the surface of the metal profile is shot blasted or sanded before the application of the polymer matrix.

In one embodiment, in the method for hybrid profile production, the metal profile is obtained from a metallic billet.

In one embodiment, in the method for hybrid profile production, the profile obtained from a metallic billet is cooled, preferably to at least 200 °C before the application of the polymer matrix.

It is also described a production method of the hybrid profile described in any of the previous claims that comprises the following steps: obtaining by extrusion a metal profile with predetermined shape and dimensions; cooling the metal profile, preferably to at least 200 °C; applying on the metal profile simultaneously a polymer matrix reinforced with fibers, wherein the fibers and matrix are superimposed on the metal profile by pultrusion; curing or consolidating the metal profile with the polymer matrix between 150° and 250°C.

In one embodiment, in the method for hybrid profile production, the metal profile is shot blasted or sanded before the application of the polymer matrix and heated before the application of the polymer matrix, preferably 2 - 3 hours in an oven between 150- 180 °C.

### BRIEF DESCRIPTION OF THE DRAWINGS

For an easier understanding, figures are herein attached, which represent preferred embodiments which do not intend to limit the object of the present description.

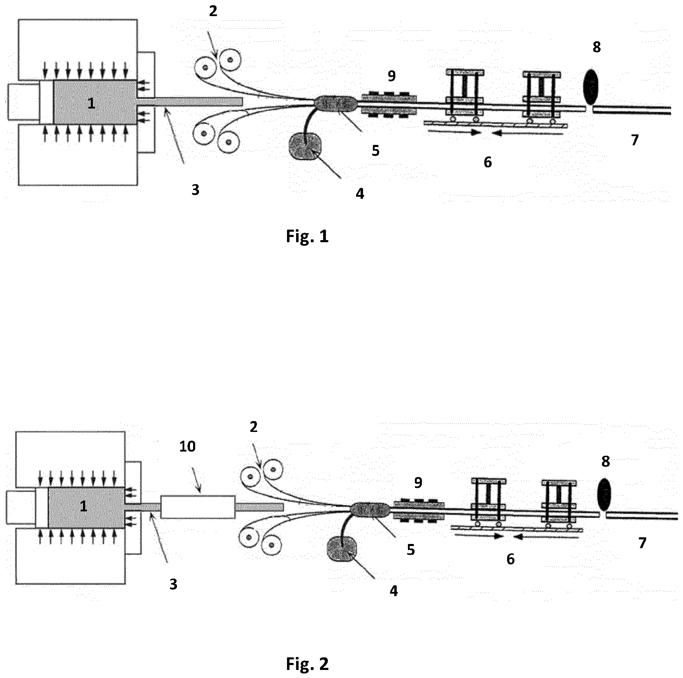

**Figure 1****:** Schematic representation of an embodiment of the process for obtaining a hybrid profile without cooling, where:
   (1) represents a billet;
   (2) represents a supply of reinforcing fibers;
   (3) represents a metal profile;
   (4) represents a resin supply pump;
   (5) represents a tool for resin injection;
   (6) represents a traction system;
   (7) represents a hybrid profile,
   (8) represents a cutting saw;
   (9) represents a die.
**Figure 2****:** Schematic representation of an embodiment of the process of producing a hybrid profile with cooling, where (10) represents a cooling tunnel.
**Figure 3****:** Representation of an embodiment of the effects of time and temperature on the elastic limit stress and maximum stress for alloy 6063 by the application of the artificial aging process (Kennedy, 2014).
**Figure 4****:** Representation of an embodiment of the effects of aging on elastic limit stress and maximum stress for alloy 6063 (Kennedy, 2014).
**Figure 5****:** Representation of an experimental embodiment of the cross-section of the profiles used.
**Figure 6****:** Representation of an experimental embodiment of the hybrid profile used.
**Figure 7****:** Representation of an experimental embodiment with placement of the hybrid profile sample in the test machine, for a 3-point bending test.
**Figure 8****:** Graphic representation of an experimental embodiment with demonstration of the force-displacement curve for samples 1, 12 and 13.

### DETAILED DESCRIPTION

The present disclosure refers to a hybrid profile, which comprises a layered structure wherein the layered structure comprises a metal profile with predetermined shape comprised by aluminum alloy, magnesium alloy, titanium alloy, steel, wood, or combinations thereof; a polymer matrix reinforced with carbon fibers **(2)**, fiberglass, natural organic fibers, synthetic fibers or combinations thereof; wherein the bond between the metal profile and the polymer matrix is made through the polymer matrix. The hybrid profile of this embodiment presents a high stiffness and fatigue resistance, low mass, ductility and a simplified manufacturing process.

In one embodiment, this disclosure is based on the idealization of a production line based on the association of the extrusion process with the pultrusion process, in order to create a solution of high productivity and efficiency for the production of hybrid profiles **(7)** comprising a metal alloy **(3)**, preferably an aluminum alloy and a polymer matrix composite.

In one embodiment, a solution is presented for the production process of hybrid profiles **(7)** metal/composite that involves dispensing the aging process of the metal profiles **(3)** and performing hybridization right after the stretching step (6). In this case, the process of curing and/or consolidation of the composite, which takes place between 150° and 250°C, replaces the aging process. In particular, this process can thus take advantage of the latent heat present in the metal profiles after the extrusion process thereof. The profile thus obtained has potentially different characteristics because the aging of the profile is partially performed through the heat of curing/consolidation of the composite.

In one embodiment, when compared to the traditional process, the solution of this disclosure dispensing the aging process of the metal profiles and performing the hybridization right after the stretching step, allows the metal profiles **(3)** to be already without curvature and without residual stresses that always exist after extrusion. One of the advantages of the process for obtaining hybrid metal profiles **(7)** described in this disclosure is the fact that there is a first inspection of profiles **(3)** right after that step, what would mean that if the profiles **(3)** were defective, they would be immediately discarded at this stage, which would reduce scrap costs, in particular of value-added profiles after pultrusion.

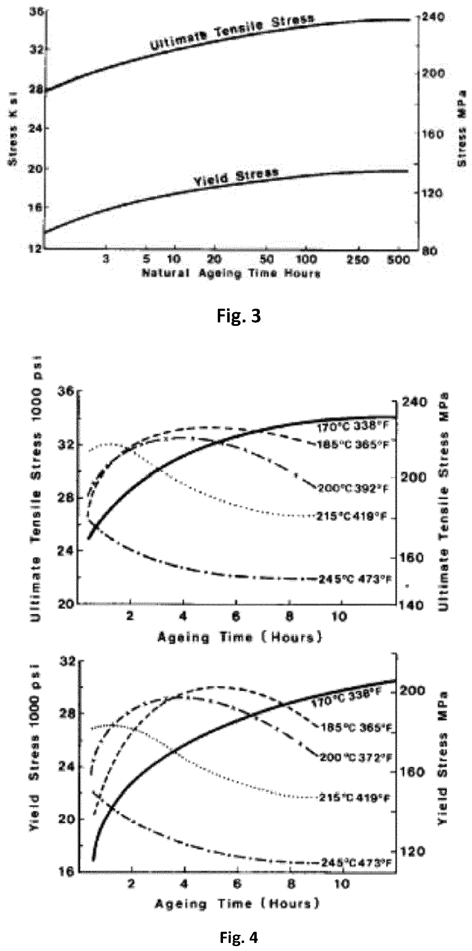

In one embodiment, a comparative analysis would have to be performed between the non-gain of strength and hardness that comes from the aging process, but that is obtained with the addition of the composite material. As an example, it can be seen from **Figure 3** and **Figure 4** that the yield stress of alloy 6063 before the aging (artificial) treatment is of approximately 90 MPa, while after aging it will be 200 MPa, which means an increase of 122.2%. In the case of the maximum stress before aging this is close to 190 MPa and, after treatment, is 220 MPa, here the gain is not so sharp, only 15.8%, but it is still evident.

As such, by using the polymer matrix, the yield stress and the maximum stress of the profile are increased **(7)**. Thus, it is possible to discard the aging treatment of the metal profiles **(3)**, preferably aluminum alloys, since it is possible to obtain gain of both properties of interest without needing it. Moreover, the increase of stresses, both maximum and yield stresses, together with the addition of the composite material layer will probably be much higher than what could be obtained with aging. This increase is more significant, increasing the number of composite layers. Thus, profiles **(7)** with excellent mechanical properties would be obtained, being a much more advantageous solution.

In another embodiment, the option will be to place the pultrusion system after the aging of the profiles **(3)**. The metal profiles **(3)** can be taken to the oven for batch aging, that is, there is no continuous process here and, therefore, productivity will no longer be as high. However, in this embodiment there is the guarantee of the best properties of the metal profiles **(3)**, preferably of aluminum alloy, with the possibility of creating a hybrid **(7)** with improved characteristics. The aging treatment can be carried out at a temperature that can vary depending on the metal profile **(3)**, ranging between 170 °C and 200 °C. The stage time also varies greatly, and can be between 3-12 hours, preferably 4-10 hours, more preferably 5-6 hours. The temperatures associated with this process are already more attractive with regard to curing resins, although for some of these they may still be somewhat high temperatures.

In one embodiment, for best results the metal profile **(3)**, preferably of aluminum, when entering the oven, is subjected to aging and thereafter exits therefrom in a sequential manner at a still high temperature, following the pultrusion process. Currently, profiles **(3)** are placed inside the oven in batches. As perceived, this situation does not allow the continuity that was initially intended with the adaptation of pultrusion. Thus, it is necessary an equipment where the profiles **(3)** can be placed immediately after the aging process, from which they could be fed to the pultrusion process.

In one embodiment, with the configuration of steps described above, wherein the profiles **(3)** leave batch aging and then move to a transfer equipment, the use of heat is no longer as relevant because they will have to stay in the equipment waiting to be fed to the pultrusion process, so therefore, when they are to be used, the temperature has already dropped several degrees, which implies heating during the pultrusion process for ensuring the cure/consolidation of the composite. An alternative hypothesis is to have a feeding equipment, wherein the storage of the profiles **(3)** is the place where the aging of the profiles would take place.

In the embodiment of **Figure 1**, a manufacturing process of the hybrid profile **(7)** is described that presents very high productivity, thanks to the continuity of the global process, since it is possible to use the remaining heat of the extrusion of the metal profiles **(3)** for performing the curing/consolidation of the composite matrix between 150°C and 250°C, thus being possible not only to increase productivity, but also to reduce energy costs. The speeds associated with the extrusion process are in a range ranging from 5 to 100 m/min, while the speeds related to the pultrusion process are much lower, usually being between 1 - 10 m/min. This prevents there being a continuity and a perfect timing between the processes, with compatibility being found in a very restricted speed range. In a preferred embodiment, when the profiles comprise the alloys **(3)** most used for extrusion, they require an aging treatment to acquire the characteristic strengths and hardness. In one embodiment, the temperatures at the exit of the die are usually higher than 500 °C, which is well above the curing temperature of any resin. However, this situation does not create a major obstacle, since a rapid cooling could be carried out up to a temperature congruent with the curing of the resin. The common extrusion process already presents a form of rapid cooling consisting of a temper T5, performed immediately after the output of the material from the extrusion die and that aims to avoid the formation of coarse precipitates that appear at certain temperature ranges (for the desired alloys the temperature range varies between 417 °C and 316 °C) and lower the strength of the material. Thus, the cooling **(10)** exemplified by **Figure 2** is even seen as an asset. In this embodiment, a forced air-cooling **(10)** would be preferable than water cooling due to the care that is necessary to take with the aluminum surface to avoid adhesion problems. The biggest problem associated with this solution is that the profiles **(3)** have a certain curvature after leaving the die, something that is further intensified with the fast cooling **(10)** and, therefore, the need to exist stretching **(6)** which aims to straighten the profiles **(3)** and relieve residual stresses. However, in order to perform stretching before hybridization **(6)**, profiles **(3)** need to be at temperatures lower than those of curing/consolidation of the composite, which, depending on the matrix type, may not allow the use of high temperatures for curing the resin. This being the case, the process will be less energy efficient.

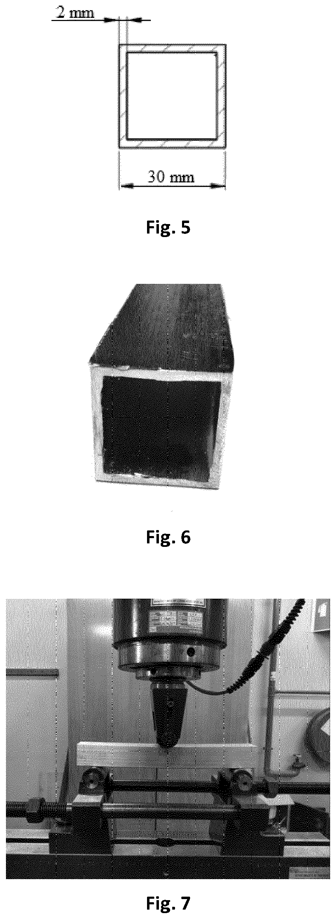

In one embodiment, for hybridization of a metal profile/polymer matrix, a metal profile (3) of square section was used, with 30 mm width and 2 mm thickness, as represented in **Figure 5**. The polymer matrix to associate with metal profiles, e.g. aluminum profile, was a pre-impregnated with epoxy resin matrix reinforced with unidirectional carbon fibers **(2)**.

In one embodiment, aluminum profiles **(3)** were cut in lengths of 250 mm. Then the prepregs were cut into 30 mm wide by 250 mm long rectangles, for later application on the surfaces of the profile **(3)**. Some profiles were heated to 180 °C before the application of the prepreg, in these cases, the lengths of the prepreg cut were greater than 250 mm in order to provide some room for manoeuvre for their manual application in the hot profiles **(3)**. In cases where prepreg was added, only one composite layer was used with the fibers **(2)** longitudinally oriented. The prepreg resin must ensure the bond between the metal profile, preferably aluminum, and the polymer matrix, so no adhesives were used. The first profiles **(3)** for the test aimed to test the adhesion of the polymer matrix to the surface of the metal profile **(3)**, preferably aluminum, so three samples were made with the following characteristics:
**Sample 1 (A1):** Profile without any kind of modification, tested as it was acquired;
**Sample 2 (A2):** Aluminum profile having a prepreg layer applied;
**Sample 3 (A3):** Preheated aluminum profile, having a prepreg layer applied.

In one embodiment, the difference between sample 2 (A2) and sample 3 (A3) is in the preheating of the metal profile, before the placement of the prepreg. One of the objectives of this preheating is associated with the use of the high temperatures associated with the extrusion process to perform the curing of the resin. Thus, the profile of sample 3 (A3) was heated for 3 hours in an oven at 180°C, a temperature that is compatible with the cure/consolidation associated with the prepreg used, being also a temperature close to those used in the aging process of aluminum profiles after extrusion. Subsequently, and with the hot profile, the composite layer was applied. Samples 2 and 3 were subsequently subjected to a resin curing cycle that is based on ramp heating up to 180°C, a 2-hour stage maintaining this temperature and subsequent cooling, as recommended for this type of prepregs.

In one embodiment, since the use of the autoclave was not possible, to create some pressure on the profiles **(3)**. **Figure 6** shows the hybrid profile **(7)** obtained at the end of the cure. This was because it is quite difficult to manually pre-impregnate surfaces that were not the upper one in the case of the preheated profile. In one embodiment, it was then opted to place the prepreg only on a surface in all samples, to allow the comparison of results.

In one embodiment, the profiles were placed in the test machine so that the surface with the composite was under tensile stress. **Figure 7** shows one of the hybrid profiles **(7)** in the test machine, wherein, although not very visible, the polymer matrix layer is at the bottom, thus remaining to traction, as intended.

Subsequently, in one embodiment, the profiles **(7)** were tested, verifying that the adherence was not very satisfactory. It was then decided to change the roughness of the surface in order to verify whether the results would be improved.

In the following the treatments applied to each sample are specified:
**Sample 4 (A4):** Aluminum profile, having sanded surface and a prepreg layer applied;
**Sample 5 (A5):** Aluminum profile, having sanded surface and a prepreg layer applied;
**Sample 6 (A6):** Aluminum profile, having sanded surface, preheated and having a prepreg layer applied;
**Sample 7 (A7):** Aluminum profile, having sanded surface, preheated and having a prepreg layer applied;
**Sample 8 (A8):** Aluminum profile, having shot blasted surface and having a prepreg layer applied;
**Sample 9 (A9):** Aluminum profile, having shot blasted surface and having a prepreg layer applied;
**Sample 10 (A10):** Aluminum profile, having shot blasted surface, preheated and having a prepreg layer applied;
**Sample 11 (A11):** Aluminum profile, having shot blasted surface, preheated and having a prepreg layer applied.
**Sample 12 (A12):** Aluminum profile, control, subjected only to the curing cycle;
**Sample 13 (A13):** Aluminum profile, control, subjected to preheating cycle and curing cycle.

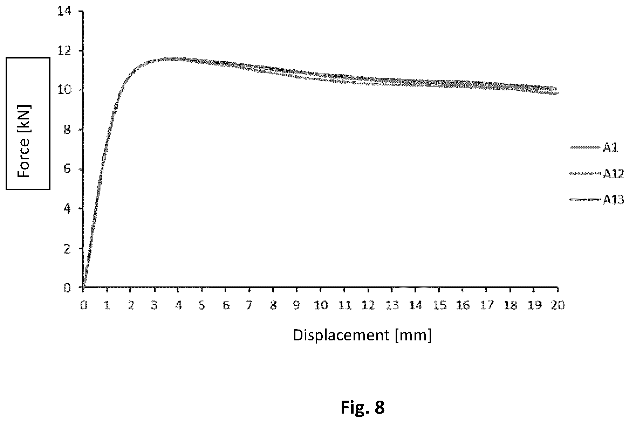

In one embodiment, an analysis was performed to the previous profiles without application of prepreg, that is, samples 1, 12 and 13, in order to understand if the preheating and curing cycles would have some influence on the metal profile, preferably the aluminum profile. To make this comparison, **Figure 8** shows the graph with the force curves as a function of the displacement of these samples and **Table 1** with the maximum forces and respective deformations. In the graph, it can be verified that there are no significant changes, implying that the phenomenon of over aging has not occurred, which could decrease the strength of the profiles where the prepreg had been applied. Regarding maximum forces, it is observed that there was even an increase, but it was so insignificant that it can be considered constant. Thus, it was ensured that the comparisons that had been made between the hybrid profiles and the profile as acquired proved to be correct.

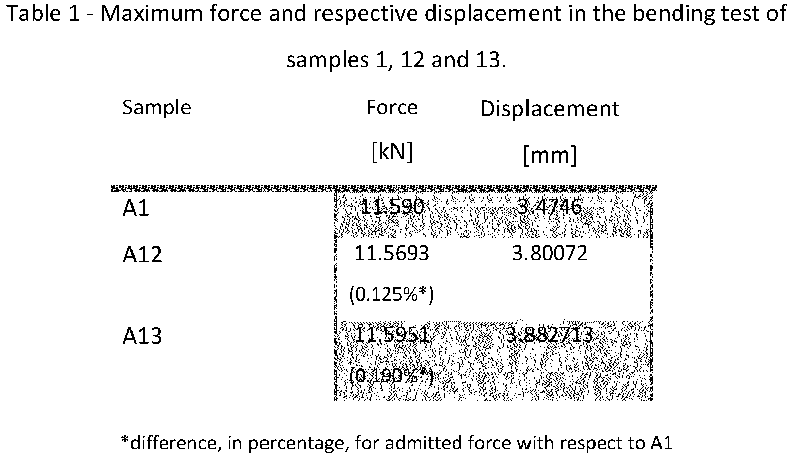

**Table 2** summarizes the results of the maximum force obtained for all samples subjected to the test and their displacement, except for control samples 12 and 13. It also shows the percentage value of improvement of this maximum force (strength) in relation to the non-hybrid profile. As can be seen, there is, in all cases, an improvement of the maximum force with a minimum value of 10.72% for sample 2, with the surface unchanged and without preheating, and a maximum of almost 16% for sample 7, with the surface altered through the use of sandpaper and preheated profile. That is, in one embodiment, through the addition of a polymer matrix, preferably of epoxy resin reinforced by carbon fibers, with a thickness of approximately 0.4 mm, increases in maximum force can be achieved that can reach at least 16%.

**Table 2 - Maximum force and respective displacement in the bending test of all samples.**

| Sample | Force [kN] | Displacement [mm] |
|---|---|---|
| A1 | 11.5190 | 3.4746 |
| A2 | 12.7542 (10.72%*) | 3.9112 |
| A3 | 12.9937 (12.80%*) | 3.5832 |
| A4 | 13.2873 (15.35%*) | 4.2031 |
| A5 | 13.1405 (14.08%*) | 4.2057 |
| A6 | 13.3342 (15.76%*) | 4.2231 |
| A7 | 13.3589 (15.97%*) | 4.1712 |
| A8 | 13.1309 (13.99%*) | 4.2325 |
| A9 | 13.1505 (14.16%*) | 4.2086 |
| A10 | 13.0195 (13.03%*) | 4.0095 |
| A11 | 13.1325 (14.01%*) | 3.9741 |

| | | |
|---|---|---|
| *percentage of admitted force improvement with respect to A1 | | |

Based on the results presented, it can then be concluded that the hybrid profiles described in this embodiment have better specific mechanical properties, namely a higher specific strength, low mass.

This disclosure presents the possibility of including the pultrusion process in three distinct zones. In the case of the embodiment presented in **Figure 1**, it was found that this was the one that revealed a guarantee of higher process speeds, although the warp (or curvature) that the metal profiles **(3)**, preferably aluminum profiles, exhibit after leaving the matrix, subsequent cooling and still, some existing residual stresses, may mean that this approximation is not the most appropriate.

In the embodiment that proposes to place the pultrusion line following the stretching step of the profiles, it allows the metal profiles **(3)**, preferably metal profiles, preferably aluminum profiles, to be already without curvature and without residual stresses that could exist. This embodiment allows dispensing the aging process, depositing in the composite part the increase of the yield stress and the maximum stress. Despite not presenting the same cadence associated with the first embodiment, presented in **Figure 1**, it still manages to impose as an option, due to the time gained by discarding the aging step, which is a very time-consuming process.

The embodiment proposed in **Figure 2**, which consists in the inclusion of pultrusion at the end of aging, is the one with the greatest production times. On the other hand, it is the one that guarantees the metal, preferably aluminum, with the highest stresses, both of maximum and yield, and also higher hardness.

Thus, the embodiment that proposes to place the pultrusion line following the stretching step of the profiles **(3)**, is the one that presents a better relationship between process speeds, properties obtained and ease of implementation.

In one embodiment, the hybrid profiles of metallic material **(3)**, preferably aluminum, and polymer matrix composite, preferably epoxy resin reinforced with carbon fibers, where the metal-composite bonding is performed using the resin that makes up the composite matrix, are promising, this is because in all profiles in which a composite layer was placed there was an improvement in the maximum force exerted in the bending tests.

Regarding adhesion, in profiles **(3)** where no surface modification was made, it was not satisfactory at all, with adhesive ruptures being found. More interesting results were found with the preparation of the surface by sanding or shot blasting, with better adhesions occurring in samples with a shot blasted surface.

The embodiments described are combinable with each other. The present invention is not, of course, in any way restricted to the embodiments described in this document and a person with ordinary skills in the art can foresee many possibilities of modification and substitutions of technical characteristics by other equivalents, depending on the requirements of each situation, as defined in the attached claims. The following claims define further embodiments of the present description.

## Claims

1. Hybrid profile as a semi-finished product, which comprises a layered structure wherein the layered structure comprises:
a metal profile with predetermined shape obtained by extrusion;
a polymer matrix reinforced with a plurality of fibers;
wherein the fibers are superimposed on the metal profile encompassing at least partially said metal profile;
wherein the fibers are bonded to the metal profile through the polymer matrix;
wherein the polymer matrix was subjected to heat treatment for curing or consolidation after application by pultrusion in the metal profile;
wherein the metal profile was subjected to the artificial aging treatment by said heat treatment of the polymer matrix.

2. Profile according to the previous claim wherein the metal profile was artificially aged exclusively by the heat treatment of the polymer matrix.

3. Profile according to any of the previous claims wherein the fibers and the polymer matrix are evenly distributed along the metal profile.

4. Profile according to any of the previous claims wherein the fibers are on the polymer matrix in the form of fiber bundle.

5. Profile according to any of the previous claims wherein the fibers are selected from a list consisting of: carbon fibers, graphite fibers, fiberglass, natural organic fibers, synthetic fibers, or combinations thereof.

6. Profile according to any of the previous claims wherein the metal profile is made of a metal alloy of: aluminum, magnesium, titanium, steel or combinations thereof, in particular an aluminum metal alloy.

7. Profile according to any of the previous claims wherein the fibers are soaked in the polymer matrix, in particular the fibers are pre-impregnated fibers in the polymer matrix.

8. Profile according to any of the previous claims wherein the ratio between the metal profile/polymer matrix is 4/1 - 49/1 by mass/mass, preferably a ratio of 10/1 - 30/1 mass/mass.

9. Profile according to any of the previous claims wherein the polymer matrix is a thermoset or thermoplastic matrix, in particular a thermoset matrix of epoxy resin.

10. Profile according to any of the previous claims wherein the ratio between the polymer matrix and the fibers is 1/4 - 7/3 by mass/mass, preferably a ratio of 1/1 - 6/3 mass/mass.

11. Profile according to any of the previous claims wherein the carbon fiber comprises a carbon content of 80% - 95% by mass or wherein the graphite fiber comprises a carbon content of 95% - 99% by mass.

12. Profile according to any of the previous claims wherein the cross-section of the predetermined profile is U-shaped, L-shaped, H-shaped, semicircular section, oval section, circular section, square section, or combinations thereof.

13. Profile according to any of the previous claims wherein the polymer matrix comprises a thickness of 0.2 - 0.5 mm, preferably 0.3 - 0.4 mm.

14. Method for the production of the hybrid profile described in any of the previous claims that comprises the following steps:
obtaining by extrusion a metal profile with predetermined shape and dimensions;
cooling the metal profile, preferably at 200 °C or less;
applying on the metal profile simultaneously a polymer matrix reinforced with fibers, wherein the fibers and matrix are superimposed on the metal profile by pultrusion;
aging the metal profile together when curing or consolidating the polymer matrix, preferably between 150° and 250°C.

15. Method for hybrid profile production described in the previous claim wherein the metal profile is shot blasted or sanded before the application of the polymer matrix and kept heated up to 150 - 250 ° C from the extrusion to the application of the polymer matrix, preferably for 2 - 3 and artificially aged only by the thermal treatment of the polymer matrix.
